# EUROPÄISCHE PATENTSCHRIFT

(11) **EP 1 642 110 B1**
(45) Veröffentlichungstag und Bekanntmachung des Hinweises auf die Patenterteilung: **08.12.2010**
(21) Anmeldenummer: 04739637.9
(22) Anmeldetag: 05.06.2004
(51) Int. Cl.: G01N 1/20, G01N 1/10, B01L 3/02

(54) **PROBENENTNAHMEVORRICHTUNG FÜR EIN MIKROREAKTIONSSYSTEM**
SAMPLING DEVICE FOR A MICROREACTION SYSTEM
DISPOSITIF DE PRELEVEMENT D'ECHANTILLONS DESTINE A UN SYSTEME DE MICROREACTION

(30) Priorität: 04.07.2003 DE 10330299
(43) Veröffentlichungstag der Anmeldung: 05.04.2006
(73) Patentinhaber: Merck Patent GmbH, 64293 Darmstadt (DE)
(72) Erfinder: SCHMELZ, Michael, 64560 Riedstadt (DE); BRENNER, Günter, 64347 Griesheim (DE); GREVE, Thomas, 64291 Darmstadt (DE); WURZIGER, Hanns, 64291 Darmstadt (DE); ARNDT, Mirco, 82140 Olching (DE)
(86) Internationale Anmeldenummer: PCT/EP2004/006094
(87) Internationale Veröffentlichungsnummer: WO 2005/003733

(56) Entgegenhaltungen:
- DE-A- 2 107 663
- US-A- 3 974 697
- US-A- 6 074 880
- US-A- 6 085 602
- US-B1- 6 401 769

## Beschreibung

Die Erfindung betrifft eine Probenentnahmevorrichtung für ein Mikroreaktionssystem mit einer Austrittsöffnung für an der Reaktion beteiligte Substanzen.

Eine ständige Entwicklung und fortschreitende Miniaturisierung von Mikroreaktoren und Mikroreaktionssystemen ermöglichen mittlerweile die Durchführung chemischer Reaktionen bei minimalem Einsatz von Reagenzien. Insbesondere bei der Durchführung einer großen Anzahl von Testreaktionen und Analysen können durch die Verwendung von miniaturisierten Mikroreaktionssystemen Aufwand und Kosten sowohl hinsichtlich der notwendigen Substanzmengen als auch der erforderlichen Reaktionsdauern eingespart werden. Darüber hinaus wird die thermische Prozessführung durch die verringerten Massenströme vereinfacht und die Sicherheit bei der Durchführung der chemischen Reaktionen gegebenenfalls erheblich erhöht.

Oftmals ist es dabei notwendig, aus einem kontinuierlich betriebenen Mikroreaktionssystem geringe Probenmengen zu entnehmen, ohne den Fluss der Reagenzien durch das Mikroreaktionssystem oder eine ablaufende chemische Reaktion zu behindern oder zu stoppen. Dazu ist üblicherweise eine Austrittsöffnung vorgesehen, die an geeigneter Stelle innerhalb des Mikroreaktionssystems angeordnet ist und über ein Ventil steuerbar ist. Je nach Ausgestaltung der Austrittsöffnung und des diese Austrittsöffnung steuernden Ventils entstehen dabei mit dem Mikroreaktionssystem in Verbindung stehende Hohlräume, in welchem die im Mikroreaktionssystem ablaufende chemische Reaktion nicht oder nur unter anderen, meistens unkontrollierbaren Bedingungen abläuft. Das Vorhandensein solcher als Totvolumina bezeichneter Hohlräume kann die chemische Reaktion im Mikroreaktionssystem in unerwünschter Weise beeinflussen und zudem die Aussagekraft einer Auswertung vermindern, bei welcher die entnommene Probenmenge ausschließlich oder zum Teil aus einem im Bereich der Austrittsöffnung bestehenden Totvolumen entnommen wurde.

Zusätzlich erfordert die Verwendung von Ventilen aufwendige Spülvorgänge, um nach Beendigung einer durchgeführten Mikroreaktion und vor Beginn einer nachfolgenden Mikroreaktion das Mikroreaktionssystem einschließlich des damit in Verbindung stehenden Ventils sorgfältig zu reinigen, um eine Kontamination der nachfolgenden Mikroreaktion zu vermeiden. Ebenfalls lässt sich ein dichter Verschluss einer Austrittsöffnung mittels eines Ventils nur mit erheblichem konstruktivem Aufwand sicherstellen.

Aufgabe der Erfindung ist es demzufolge, eine Probenentnahmevorrichtung so auszugestalten, dass aus einem Mikroreaktionssystem zuverlässig Proben entnommen werden können, wobei Totvolumina im Bereich der Austrittsöffnung zur Probenentnahme möglichst vermieden und dadurch eine Beeinträchtigung der im Mikroreaktionssystem ablaufenden chemischen Reaktion vermindert werden soll.

Diese Aufgabe wird erfindungsgemäß dadurch gelöst, dass eine Öffnung eine Absaugleitung seitlich neben der Austrittsöffnung angeordnet ist, wobei in der Absaugleitung zum Absaugen der aus der Austrittsöffnung austretenden Substanzen ein Unterdruck erzeugbar ist. Die Austrittsöffnung wird dabei entweder als Ausgang des Mikroreaktionssystems zum vollständigen Austreten der an der chemischen Reaktion beteiligten Substanzen verwendet oder an geeigneter Stelle innerhalb des Mikroreaktionssystems ausreichend klein gestaltet, so dass eine an dieser Stelle kontinuierlich austretende Substanzmenge die im Mikroreaktionssystem ablaufende Reaktion nicht wesentlich beeinträchtigt. Dadurch besteht keine Notwendigkeit für die Anordnung eines Ventils zwischen der Austrittsöffnung und dem damit verbundenen Mikroreaktionssystem, so dass praxistaugliche konstruktive Ausgestaltungen denkbar sind, die mit einem nur minimalen oder sogar gänzlich ohne ein Totvolumen im Bereich der Austrittsöffnung auskommen.

Ob die aus der Austrittsöffnung zu einem bestimmten Zeitpunkt austretende Substanzmenge nicht weiter verwendet oder aber als entnommene Probe einer weiteren Auswertung zugeführt wird, lässt sich mittels der unmittelbar neben der Austrittsöffnung angeordneten Absaugleitung steuern. Herrscht in der Absaugleitung ein ausreichender Unterdruck, so wird die aus der Austrittsöffnung zu einem bestimmten Zeitpunkt austretende Substanzmenge in die Absaugleitung hinein gesaugt. Ohne Unterdruck in der Absaugleitung fällt die aus der Austrittsöffnung austretende Substanzmenge unbeeinflusst neben der Absaugleitung vorbei und kann unterhalb der Absaugleitung aufgefangen und gesammelt werden. Abhängig von einer bevorzugten konstruktiven Gestaltung oder dem Mengenverhältnis von nicht weiter verwendeter Substanz zu der als entnommene Probe zur weiteren Auswertung herangezogene Substanz kann entweder die in die Absaugleitung abgesaugte Substanzmenge oder die unterhalb der Absaugleitung neben diese herabfallende Substanzmenge zur weiteren Verwendung herangezogen werden.

Vorzugsweise ist dabei vorgesehen, dass um die Austrittsöffnung herum ein Gehäuse angeordnet ist mit einer Auslassöffnung für aus der Austrittsöffnung austretende Substanzen und mit einer Durchführungsöffnung für die Absaugleitung. Das Gehäuse schützt einerseits den Bereich um die Austrittsöffnung vor ungewünschten unkontrollierbaren Umgebungseinflüssen und erlaubt andererseits mit einfachen Mitteln die präzise und reproduzierbare Anordnung der Absaugleitung im Verhältnis zur Austrittsöffnung. Je näher die Öffnung der Absaugleitung relativ zur Austrittsöffnung angeordnet werden kann, ohne dass austretende Substanzen in direkten Kontakt mit der Absaugleitung kommen, umso geringer ist der mindestens notwendige Unterdruck innerhalb der Absaugleitung, um ein vollständiges Absaugen der aus der Austrittsöffnung austretenden Substanzmenge zu gewährleisten.

Einer Ausgestaltung des Erfindungsgedankens zufolge ist vorgesehen, dass die Anordnung der Öffnung der Absaugleitung relativ zur Austrittsöffnung veränderbar ist. Auf diese Weise kann bei vorgegebenem Unterdruck in der Absaugleitung die dadurch verursachte Saugwirkung im Bereich der Austrittsöffnung verändert werden, um möglicherweise unterschiedlichen Eigenschaften der verwendeten Substanzen und Reaktionsprodukte, beispielsweise verschiedenen Viskositäten oder Flüchtigkeiten Rechnung zu tragen.

Gemäß einer Ausgestaltung des Erfindungsgedankens ist vorgesehen, dass die Absaugleitung in einen Sammelbehälter mündet, der über ein Ventil mit einer Vakuumleitung verbunden ist. So kann beispielsweise bei kontinuierlichem Unterdruck das Mikroreaktionssystem über die Austrittsöffnung vollständig entleert werden, wobei die austretenden Substanzmengen über die Absaugleitungen in den Sammelbehälter gespült werden. Nach einer vollständigen Entleerung des Mikroreaktionssystems, gegebenenfalls mit einer nachfolgenden Spülung mit Reinigungsmitteln, befinden sich alle an der Reaktion beteiligten Substanzen in dem Sammelbehälter, beispielsweise einer handelsüblichen Waschflasche. Dieser Sammelbehälter kann einfach von der Probenentnahmevorrichtung getrennt und entnommen werden, um eine Entsorgung oder weitere Verwendung der Reaktionsprodukte zu ermöglichen.

Über das in der Vakuumleitung zum Sammelbehälter angeordnete Ventil lässt sich der Unterdruck in dem Sammelbehälter und der in den Sammelbehälter mündenden Absaugleitung in einfacher Weise steuern. Die Vakuumleitung führt entweder direkt zur einer Vakuumpumpe oder ist Teil eines Vakuumsystems mit einer Vielzahl von Anschlüssen, wie es insbesondere in größeren chemischen Labors installiert ist. Der Sammelbehälter und die Absaugleitung weisen dabei ein ausreichend kleines Innenraumvolumen auf, um möglichst verzögerungsfrei in Abhängigkeit von der Ventilsteuerung einen ausreichenden Unterdruck zum Absaugen aufbauen oder ausgleichen zu können.

In dieser vorteilhaften Betriebsart des kontinuierlichen Absaugens der aus der Austrittsöffnung austretenden Substanzmengen kann eine Probe zu einem beliebigen Zeitpunkt entnommen werden, indem durch kurzzeitiges Schließen des Ventils der Absaugvorgang unterbrochen wird und die aus der Austrittsöffnung austretende Substanzmenge an der Absaugleitung vorbei in einen unterhalb der Austrittsöffnung angeordneten Probenbehälter fällt. Die zu entnehmende Probenmenge lässt sich über die Zeitdauer vorgeben, innerhalb der kein Absaugen der austretenden Substanzen stattfindet.

Vorzugsweise ist vorgesehen, dass die Austrittsöffnung in Form einer Kapillare gestaltet ist. Eine Kapillare ermöglicht einerseits ein genaues Dosieren auch von geringen Substanzmengen während des Austretens aus dem Mikroreaktionssystem und verhindert andererseits weitgehend eine Beeinflussung der in dem Mikroreaktionssystem ablaufenden Reaktionen durch die wechselnden Druckverhältnisse in unmittelbarer Umgebung der Austrittsöffnung. Der Innendurchmesser der Kapillare wird dabei zweckmäßigerweise ausreichend klein gewählt, um ein vollständiges Absaugen der austretenden Substanzmengen zu gewährleisten und andererseits ausreichend groß gewählt werden, um ein kontinuierliches Austreten der Substanzen nicht durch einen stark ansteigenden Differenzdruck bei der Kapillare zu gefährden. Mit einer geeigneten Kapillare kann insbesondere sichergestellt werden, dass die Substanz in einem feinen, freien Strahl aus der Austrittsöffnung austritt.

Vorteilhafterweise ist vorgesehen, dass die Probenentnahmevorrichtung im Bereich der Austrittsöffnung beheizbar ist. Es hat sich gezeigt, dass es bei Verwendung von leicht flüchtigen Lösungsmitteln wie beispielsweise Dichlormethan oder Äther auf Grund der Verdampfungsenthalpie des Lösungsmittels zur Eisbildung an der Autrittsöffnung kommen kann. Diese ungewünschte Beeinträchtigung während des Betriebs kann durch eine Erwärmung der Probenentnahmevorrichtung im Bereich der Austrittsöffnung ohne weiteres vermieden werden.

Einer Ausgestaltung des Erfindungsgedankens zufolge ist vorgesehen, dass zur Beheizung eine elektrische Heizvorrichtung oder eine Wärmekopplung vorgesehen ist. Eine elektrische Heizvorrichtung in Form eines steuerbaren Heizdrahtes lässt sich mit einfachen Mitteln in vorteilhafter Weise an die Ausgestaltung der Austrittsöffnung beispielsweise in Form einer Kapillare anpassen.

Gemäß einer Ausgestaltung des Erfindungsgedankens ist vorgesehen, dass im Bereich der Austrittsöffnung eine die Luftfeuchtigkeit verdrängende Schutzgasatmosphäre herstellbar und erhaltbar ist. Die Schutzgasatmosphäre kann anstelle oder zusätzlich zu einer Heizvorrichtung verwendet werden, um eine unerwünschte Eisbildung an einer sich abkühlenden Austrittsöffnung zu verhindern. Daraber hinaus ist es mittels einer Schutzgasatmosphäre möglich, eine Verunreinigung der aus der Austrittsöffnung austretenden Substanzen weitgehend zu verhindern.

Vorteilhafterweise ist vorgesehen, dass eine Öffnung einer Druckluftleitung seitlich neben der Austrittsöffnung der Öffnung der Abluftleitung gegenüber liegend angeordnet ist, wobei in der Druckluftleitung ein Überdruck eines Gases erzeugbar ist, um mit dem durch die Öffnung der Druckluftleitung ausströmenden Gas die aus der Austrittsöffnung austretenden Substanzen in Richtung der Öffnung der Absaugleitung zu blasen. Auf diese Weise können die austretenden Substanzen unterstützend zum Absaugvorgang durch das mit Überdruck austretende Gas in Richtung der Öffnung der Absaugleitung geblasen werden, wodurch sich eine vollständige und sichere Absaugung aller austretenden Substanzen auch bei ungünstigen Bedingungen oder mit vergleichsweise geringeren Druckdifferenzen zum Umgebungsdruck in der Abluftleitung, beziehungsweise Druckluftleitung gewährleisten lassen.

Gemäß einer Ausgestaltung des Erfindungsgedankens ist vorgesehen, dass als Gas ein chemisch weitgehend inaktives Schutzgas verwendet wird. Dadurch werden unerwünschte Reaktionen des ausströmenden Gases mit den Substanzen vermieden, die gemeinsam in die Absaugleitung abgesaugt werden. Auch lässt sich bei Verwendung eines Schutzgases eine im Bereich der Austrittöffnung der Substanzen hergestellte Schutzgasatmosphäre ungestört aufrechterhalten.

Bei entsprechender Ausgestaltung des Absaugsystems kann ohne Vakuum, nur durch den Druck der Luft oder des Inertgases, die Stubstanz von der Kapillare in das Auffangrohr geblasen werden.

Vorzugsweise ist vorgesehen, dass die Probenentnahmevorrichtung weitgehend oder vollständig aus chemisch beständigen Materialien herstellbar ist.

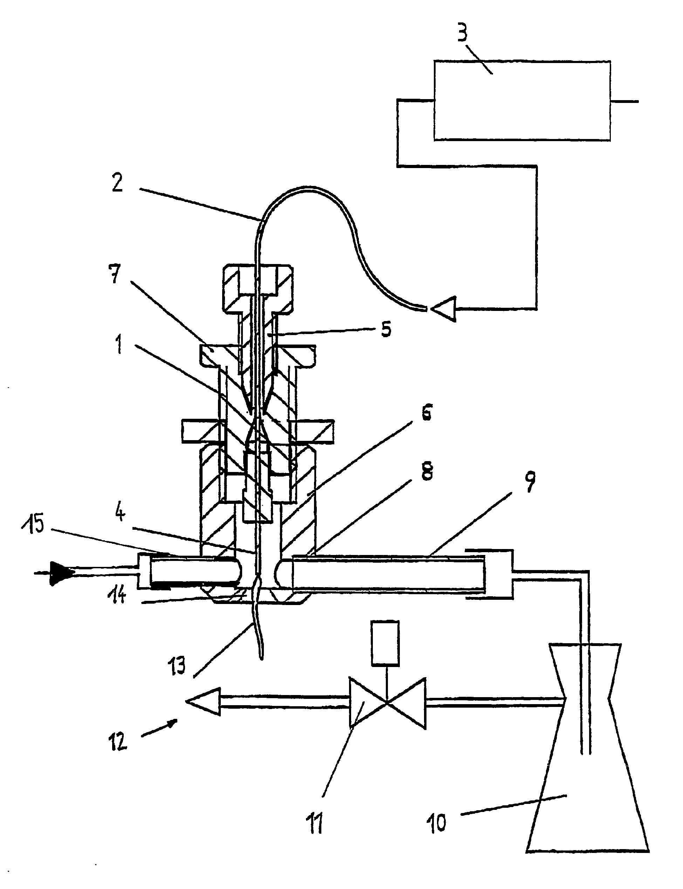

Nachfolgend wird ein Ausführungsbeispiel der Erfindung näher beschrieben, das in der Zeichnung dargestellt ist.

Die in der Figur dargestellte Probenentnahmevorrichtung 1 ist über einen Schlauch 2 mit einem Mikroreaktionssystem 3 verbunden. Nach erfolgter Reaktion wird das gesamte Mikroreaktionssystem 3 über die Probenentnahmevorrichtung 1 vollständig entleert. Die Austrittsöffnung 4 ist in Form einer Kapillare gestaltet. Der Schlauch 2 ist über ein Anschlussstück 5 lösbar mit der Austrittsöffnung 4 in Form einer Kapillare verbunden. Auf diese Weise können mehrere Mikroreaktionssysteme 3 mit verschiedenen Probenentnahmevorrichtungen 1 in beliebiger Kombination verwendet werden, so dass beispielsweise in Abhängigkeit der verwendeten Substanzen zugeordnete Probeentnahmevorrichtungen 1 mit einem für bestimmte Anwendungen geeignete Mikroreaktionssysteme 3 kombiniert werden kann oder ein zu reinigendes Mikroreaktionssystem 3 oder eine zu reinigende Probenentnahmevorrichtung 1 einfach ausgetauscht werden können, um einen möglichst kontinuierlichen Betrieb zu gewährleisten.

Die als Kapillare gestaltete Austrittsöffnung 4 ist im Innenraum eines hülsenförmigen Gehäuses 6 beweglich angeordnet. Sowohl das Anschlussstück 5 des Schlauchs 2 als auch die Austrittsöffnung 4 in Kapillarform sind in einem Gehäusedeckel 7 befestigt, der über ein Schraubgewinde mit dem Gehäuse 6 in Eingriff steht und so eine Längsverschiebung des offenen Endes der Kapillare relativ zum Gehäuseboden des Gehäuses 6 ermöglicht.

Das Gehäuse 6 weist benachbart zur kapillarförmigen Austrittsöffnung 4 eine Durchführungsöffnung 8 auf, durch die hindurch eine Absaugleitung 9 in das Innere des Gehäuses 6 ragt. Die Absaugleitung 9 mündet in eine Waschflasche 10, die über ein Magnetventil 11 mit einer Vakuumleitung 12 verbunden ist.

Bei geöffnetem Magnetventil 11 entsteht in der Waschflasche 10 und der Absaugleitung 9 ein Unterdruck, der bewirkt, dass aus der Austrittsöffnung 4 austretende Substanzen 13 in die Absaugleitung 9 gesaugt und in der Waschflasche 10 gesammelt werden.

Zur Entnahme einer Probe der Reaktionsprodukte wird das Magnetventil 11 geschlossen und dadurch der Unterdruck in der Absaugleitung 9 für eine definierte Zeit aufgehoben, wodurch die aus der Austrittsöffnung 4 austretende Substanzmenge 13 nicht in die Absaugleitung 9 gesaugt wird, sondern durch eine Auslassöffnung 14 im Boden des Gehäuses 6 hindurch austritt und in einem nicht dargestellten Probenbehälter aufgefangen werden kann.

Über die Dauer des eingeschalteten oder ausgeschalteten Vakuums lässt sich die abgesaugte bzw. durch die Auslassöffnung 14 austretende Substanzmenge 13 präzise dosieren, so dass eine Verwendung der Probenentnahmevorrichtung auch als Dosiersystem denkbar ist.

Seitlich neben der kapillarförmigen Austrittsöffnung 4 ist gegenüber der Öffnung der Absaugleitung 9 eine Öffnung einer Druckluftleitung 15 angeordnet. Wird das in der Druckluftleitung befindliche Gas mit Überdruck beaufschlagt, so strömt das Gas durch die Öffnung der Druckluftleitung 15 aus und bläst aus der Austrittsöffnung 4 austretende Substanzen in Richtung der Öffnung der Absaugleitung 9. Durch eine gleichzeitig zum Vakuum erzeugte Druckbeaufschlagung in der Druckluftleitung 15 wird das Absaugen austretender Substanzen in die Absaugleitung 9 unterstützt. Als druckbeaufschlagtes Gas wird zweckmäßigerweise Luft oder ein Inertgas zum gerichteten Wegblasen der austretenden Substanzen verwendet.

Es ist auch möglich, bei geeigneter Druckbeaufschlagung der aus der Austrittsöffnung 4 austretenden Substanzen die beschriebene Vorrichtung ohne wesentliche Änderungen auch als Druckkopf zu verwenden.

## Patentansprüche

1. Probeentnahmevorrichtung für ein Mikroreaktionssystem mit einer Austrittsöffnung für an der Reaktion beteiligte Substanzen, **dadurch gekennzeichnet, dass** eine Öffnung einer Absaugleitung (9) seitlich neben der Austrittsöffnung (4) angeordnet ist, wobei in der Absaugleitung (9) zum Absaugen der aus der Austrittsöffnung (4) austretenden Substanzen (13) ein Unterdruck erzeugbar ist.

2. Probenentnahmevorrichtung nach Anspruch 1, **dadurch gekennzeichnet, dass** um die Austrittsöffnung (4) herum ein Gehäuse (6) angeordnet ist mit einer Auslassöffnung (14) für aus der Austrittsöffnung (4) austretende Substanzen (13) und mit einer Durchführungsöffnung (8) für die Absaugleitung (9).

3. Probenentnahmevorrichtung nach Anspruch 1 oder 2, **dadurch gekennzeichnet, dass** die Anordnung der Öffnung der Absaugleitung (9) relativ zur Austrittsöffnung (4) veränderbar ist.

4. Probenentnahmevorrichtung nach einem der voranstehenden Ansprüche, **dadurch gekennzeichnet, dass** die Absaugleitung (9) in einen Sammelbehälter (10) mündet, der über ein Ventil (11) mit einer Vakuumleitung (12) verbunden ist.

5. Probenentnahmevorrichtung nach einem der voranstehenden Ansprüche, **dadurch gekennzeichnet, dass** die Austrittsöffnung (4) in Form einer Kapillare gestaltet ist.

6. Probenentnahmevorrichtung nach einem der vorangehenden Ansprüche, **dadurch gekennzeichnet, dass** die Probenentnahmevorrichtung (1) im Bereich der Austrittsöffnung (4) beheizbar ist.

7. Probenentnahmevorrichtung nach Anspruch 6, **dadurch gekennzeichnet, dass** zur Beheizung eine elektrische Heizvorrichtung oder eine Wärmekopplung vorgesehen ist.

8. Probenentnahmevorrichtung nach einem der voranstehenden Ansprüche, **dadurch gekennzeichnet, dass** im Bereich der Austrittsöffnung (4) eine die Luftfeuchtigkeit verdrängende Schutzgasatmosphäre herstellbar und erhaltbar ist.

9. Probenentnahmevorrichtung nach einem der voranstehenden Ansprüche, **dadurch gekennzeichnet, dass** eine Öffnung einer Druckluftleitung (15) seitlich neben der Austrittsöffnung (4) der Öffnung der Abluftleitung (9) gegenüber liegend angeordnet ist, wobei in der Druckluftleitung (15) ein Überdruck eines Gases erzeugbar ist, um mit dem durch die Öffnung der Druckluftleitung (15) ausströmenden Gas die aus der Austrittsöffnung (4) austretenden Substanzen (13) in Richtung der Öffnung der Absaugleitung (9) zu blasen.

10. Probenentnahmevorrichtung nach Anspruch 9, **dadurch gekennzeichnet, dass** als Gas ein chemisch weitgehend inaktives Schutzgas verwendet wird.

11. Probenentnahmevorrichtung nach einem der vorangegangenen Ansprüche, **dadurch gekennzeichnet, dass** die Probenentnahmevorrichtung (1) weitgehend oder vollständig aus chemisch beständigen Materialien herstellbar ist.

## Claims

1. Sampling device for a microreaction system having an exit aperture for substances involved in the reaction, **characterised in that** an aperture of a suction line (9) is arranged laterally alongside the exit aperture (4), where a reduced pressure can be generated in the suction line (9) for aspiration of the substances (13) exiting from the exit aperture (4).

2. Sampling device according to Claim 1, **characterised in that** a housing (6) having an outlet aperture (14) for substances (13) exiting from the exit aperture (4) and having a passage aperture (8) for the suction line (9) is arranged around the exit aperture (4).

3. Sampling device according to Claim 1 or 2, **characterised in that** the arrangement of the aperture of the suction line (9) relative to the exit aperture (4) can be modified.

4. Sampling device according to one of the preceding claims, **characterised in that** the suction line (9) runs into a collecting vessel (10), which is connected via a valve (11) to a vacuum line (12).

5. Sampling device according to one of the preceding claims, **characterised in that** the exit aperture (4) is designed in the form of a capillary.

6. Sampling device according to one of the preceding claims, **characterised in that** the sampling device (1) is heatable in the region of the exit aperture (4).

7. Sampling device according to Claim 6, **characterised in that** an electric heating device or heat coupling is provided for the heating.

8. Sampling device according to one of the preceding claims, **characterised in that** a protective-gas atmosphere which displaces the atmospheric moisture can be generated and maintained in the region of the exit aperture (4).

9. Sampling device according to one of the preceding claims, **characterised in that** an aperture of a compressed-air line (15) is arranged laterally alongside the exit aperture (4) opposite the aperture of the exhaust-air line (9), where an excess pressure of a gas can be generated in the compressed-air line (15) in order to blow the substances (13) exiting from the exit aperture (4) in the direction of the aperture of the suction line (9) by means of the gas flowing out through the aperture of the compressed-air line (15).

10. Sampling device according to Claim 9, **characterised in that** the gas used is a chemically substantially inactive protective gas.

11. Sampling device according to one of the preceding claims, **characterised in that** the sampling device (1) can be made substantially or completely of chemically resistant materials.

## Revendications

1. Dispositif d'échantillonnage pour un système de microréaction ayant une ouverture de sortie pour des substances impliquées dans la réaction, **caractérisé en ce qu'**une ouverture d'une ligne d'aspiration (9)est agencée latéralement le long de l'ouverture de sortie (4), dans lequel une pression réduite peut être générée dans la ligne d'aspiration (9) pour l'aspiration des substances (13) sortant par l'ouverture de sortie (4).

2. Dispositif d'échantillonnage selon la revendication 1, **caractérisé en ce qu'**un boîtier (6) ayant une ouverture d'acheminement à l'extérieur (14) pour les substances (13) sortant de l'ouverture de sortie (4) et ayant une ouverture de passage (8) pour la ligne d'aspiration (9) est agencé autour de l'ouverture de sortie (4).

3. Dispositif d'échantillonnage selon la revendication 1 ou 2, **caractérisé en ce que** l'agencement de l'ouverture de la ligne d'aspiration (9) par rapport à l'ouverture de sortie (4) peut être modifié.

4. Dispositif d'échantillonnage selon l'une des revendications précédentes, **caractérisé en ce que** la ligne d'aspiration (9) s'étend dans un vaisseau de collecte (10), lequel est connecté via une vanne (11) à une ligne de vide (12).

5. Dispositif d'échantillonnage selon l'une des revendications précédentes, **caractérisé en ce que** l'ouverture de sortie (4) est conçue sous la forme d'un capillaire.

6. Dispositif d'échantillonnage selon l'une des revendications précédentes, **caractérisé en ce que** le dispositif d'échantillonnage (1) peut être chauffé dans la région de l'ouverture de sortie (4).

7. Dispositif d'échantillonnage selon la revendication 6, **caractérisé en ce qu'**un couplage avec un dispositif de chauffage électrique ou avec une source de chaleur est prévu pour le chauffage.

8. Dispositif d'échantillonnage selon l'une des revendications précédentes, **caractérisé en ce qu'**une atmosphère de gaz protecteur qui déplace l'humidité atmosphérique peut être générée et maintenue dans la région de l'ouverture de sortie (4).

9. Dispositif d'échantillonnage selon l'une des revendications précédentes, **caractérisé en ce qu'**une ouverture d'une ligne d'air comprimé (15) est agencée latéralement le long de l'ouverture de sortie (4) à l'opposé de l'ouverture de la ligne d'air d'échappement (9), dans lequel une pression en excès d'un gaz peut être générée dans la ligne d'air comprimé (15) afin de souffler les substances (13) sortant de l'ouverture de sortie (4) dans la direction de l'ouverture de la ligne d'aspiration (9) au moyen du courant de gaz sortant par l'ouverture de la ligne d'air comprimé (15).

10. Dispositif d'échantillonnage selon la revendication 9, **caractérisé en ce que** le gaz utilisé est un gaz protecteur actif essentiellement chimiquement.

11. Dispositif d'échantillonnage selon l'une des revendications précédentes, **caractérisé en ce que** le dispositif d'échantillonnage (1) peut être réalisé essentiellement ou complètement en matériaux résistants chimiquement.
